# EUROPEAN PATENT APPLICATION

(11) **EP 4 434 326 A1**
(43) Date of publication of application: **25.09.2024**
(21) Application number: 23212610.2
(22) Date of filing: 28.11.2023
(51) Int. Cl.: A01G 9/02

(54) **A KIT COMPRISING A PUSH ELEMENT AND A MEMBRANE**

(30) Priority: 24.03.2023 EP 23164094
(71) Applicant: Decoplant A/S, 8464 Galten (DK)
(72) Inventor: Lauerberg Hansen, Stine, 2300 København S (DK)
(74) Representative: Patrade A/S

(57) **Abstract**

The present invention relates to a kit (70) for lining a container (20) with a membrane (30), a method of forming a plant pot (10) and a plant pot (10) thereof. The kit (70) comprises at least one membrane (30) and a push element, where the membrane (30) comprises a central membrane bottom (34) and a membrane edge (36), and the push element (50) comprises a push face complementary to the central membrane bottom (34) and a through-going channel (52) for providing soil (95) in a controlled manner. The membrane (30) is made of a waterproof material. The plant pot (10) is formed by placing the membrane (30) on the container (20) with the central membrane bottom (34) above the top aperture (24), pushing the central membrane bottom (34) towards the container bottom (22), insertion of the push element (50) into the container (20), filling soil (95) into the through-going channel (52), and removing the push element (50).

## Description

### Field of the Invention

The present invention relates to plant pots and more specifically to plant pots being recyclable and waterproof. Many prior art plant pots are either not recyclable or not waterproof. The waterproof plant pots are often made of different material which makes it impossible to recycle.

### Background of the Invention

There is an ever-increasing demand for reducing the carbon footprint of products. One of the most effective ways to reduce the carbon footprint of products is to increase re-usability and recyclability of a product.

Presently, there exist plant pots which are reusable and recyclable, however many of these are not waterproof. There exist many types of plant pots which are waterproof but many of these products are made of various different materials. Typically, one or more types of material are used for giving the plant pot a particular look or design. However, these materials may not be waterproof and thus the inside of the plant pots may be treated with epoxy to create a waterproof plant pot or epoxy incorporated into the plant pot during production.

In many embodiments, the plant pots include epoxy which is excellent for creating a waterproof barrier but the plant pots become non-recyclable or non-reusable due to the epoxy, because the plant pot and the epoxy cannot be separated in a commercially viable way. Thus, there is a need for a new solution without the use of epoxy while allowing the plant pot to be recyclable.

FR 2621778 A1 discloses a membrane for lining a container to form a plant pot, which comprises a plurality of bending lines extending from the edge of the membrane to a central bending line surrounding a bottom of the membrane. The membrane is made of a plastic material such as polypropylene.

GB 2121383 A discloses a foldable plant pot formed by folding a stiff but pliable sheet into the shape of the plant pot. The sheet comprises a plurality of folding lines extending from the edge of the membrane to a central folding line surrounding a bottom of the membrane. The membrane is made of a plastic material or a board with one side having a plastic or wax coating. The sheet is folded along the folding lines and the adjoining side sections are bonded together to form the plant pot.

Other methods of forming a plant pot are disclosed in US 5033232 A, CN 202603250 U and US 5752649 A.

### Object of the Invention

It is an object of the invention to provide a solution which enables reuse and/or recycling of the plant pot and parts thereof with limited or no subsequent processing for reuse and/or recycling of the different elements.

### Description of the Invention

An object of the invention is achieved by a kit for lining a container with a membrane, the kit comprises
- at least one membrane comprising
   - a central membrane bottom and a membrane edge;
- a push element comprising
   a push face complementary to the membrane bottom, and
   a through-going channel for providing soil in a controlled manner,
wherein the membrane is made of a waterproof material such as synthetic paper, plastic film, plastic sheet, Polyolefin film, Polyethylene, Polypropylene, Polyester, Polyvinyl chloride, or Bioplastics.

The at least one membrane is configured for the reasons described below. The push element is adapted for insertion of the membrane into a suitable container. The punch face is complementary to the membrane bottom such that the membrane can be pressed into a container with no or little deformation of the membrane bottom. The throughgoing channel enables a reliable way of providing soil into the membrane after insertion without risk of any of the membrane sides bending in a way such that soil enters between the membrane and the container. This embodiment has in tests shown to be particularly stable when inserted into various differently shaped containers. The push element may comprise a handle for holding the push element during insertion of the membrane into a container.

In an embodiment, the at least one membrane further comprises
- a central bending line surrounding and defining the central membrane bottom; and
- a plurality of bending lines extending from the central bending line and to the membrane edge and defining a plurality of membrane sides.

The length of the push element and the length of the membrane sides, e.g. the bending lines from the central bending line to the edge, may roughly be the same such that one can fill the through-going channel without risk of soil spillage on the wrong side of the membrane during use.

The membrane may be made of synthetic paper, which is waterproof, flexible, durable and tear resistant. The synthetic paper may be made of polyethylene (PE), or polypropylene (PP), or biaxially oriented polypropylene (BOPP), or high-density polyethylene (HDPE).

The membrane may be made of a plastic film or a plastic sheet, which are waterproof, light-weighted, durable and have a high strength-to-weight ratio. The plastic film or plastic sheet may be made of a polyolefin film, or polyethylene (PE), or polypropylene (PP), polyester, or polyvinyl chloride (PVC), or bioplastics.

In some embodiments the membrane may be made of a polyethylene, wherein the polyethylene is low-density polyethylene (LPDE), linear low-density polyethylene (LLPDE), medium-density polyethylene (MPDE), or high-density polyethylene (HPDE). The advantage of using polyethylene films for the membrane is that it is waterproof, lightweight, flexible, impact resistant, recyclable, and low-cost.

In some embodiments the membrane may be made of a polyester, wherein the polyester is polyethylene terephthalate (PET). The advantage of using PET-films for the membrane is that it has a high tensile strength, is waterproof, and recyclable.

In some embodiments, the membrane may be made of a polyvinyl chloride. The advantage of this is that it is waterproof, durable, non-toxic, flexible, lightweight, and low-cost.

In some embodiments, the membrane may be made of a bioplastic, wherein the bioplastic is bio-polyethylene (bio-PE), bio-polyethylene terephthalate (bio-PET), or bio-polypropylene (bio-PP).

In a preferred embodiment, the membrane is made of polypropylene. The advantage of using a polypropylene for the membrane is that it is environmentally friendly, lightweight, flexible, highly waterproof, low-cost, recyclable, and has a high tensile strength.

In another preferred embodiment, the membrane is made of polypropylene with high mineral content. This membrane is advantageous, as it is very ductile and deforms by tension.

The mineral content may be an inorganic plastic filler such as Glass fibres, Glass beads, Magnesium, Talc, Mica, Silica, Calcium silicate, Barium sulphate, Kaolin, or Sodium sulphate.

In an embodiment, the membrane is bendable, but has no bending lines. In this embodiment, the membrane is formed by a continuous sheet where the membrane bottom is located at a central portion of this continuous sheet. The annular portion surrounding the central portion forms the membrane sides. Tests have shown that the membrane sides will bend more or less randomly around the push face of the push element when inserting the membrane into the container. The push element thus acts as a punch tool where the container acts as a die.

In an embodiment, the central bending line forms an octagon comprising four broad edges, having a first length, and four narrow edges, having a second length, wherein the first length is greater than the second length, wherein the broad edges are connected to the narrow edges at vertices, wherein the vertices have substantially the same angle, and at each of the vertices two bending lines extend substantially perpendicular from respective broad edges and narrow edges, the two bending lines extend to the membrane edge.

In an embodiment, the membrane comprises a third bending line extending from each vertex to the membrane edge, wherein the third bending line extends substantially between the two bending lines extending from said vertex. The third bending line will further improve the stableness of the membrane when inserted into various differently shaped containers and in particular round containers.

In an embodiment, the push element may be made of a metal or cardboard. The embodiment made of metal may be used when the push element is to be used a plurality of times. In some embodiments, the push element is for single use and in these cases the push element may be made of cardboard, which is less expensive compared to a metal. Tests have shown that the push element made of cardboard can in many cases be used three or more times.

In an embodiment, a number of membranes are stored within the push element before use, optionally storing any remaining membranes in the push element after use. This allows the push element to act as a storage unit for the membranes. Tests have shown that a plurality of membranes can be packed within the push element so that the kit can be produced as a compact unit. The number of membranes allows for the lining of a corresponding number of containers using the same push element. Optionally, remaining membranes not used can be packed into the push element again after it is removed from the container. This allows the kit to be repacked into the compact unit after usage.

Not part of the claimed invention, an object of the invention is also achieved by a membrane for lining a container to form a plant pot, wherein the membrane comprises
- a central membrane bottom and a membrane edge;
wherein the membrane is made of a waterproof material such as synthetic paper, plastic film, plastic sheet, Polyolefin film, Polyethylene, Polypropylene, Polyester, Polyvinyl chloride, or Bioplastics.

The membrane can therefore for the reasons listed above be used together with a container and optionally a push element to form plant pots as described in the embodiments below.

The membrane may be made of synthetic paper, which is waterproof, flexible, durable and tear resistant. The synthetic paper may be made of polyethylene (PE), or polypropylene (PP), or biaxially oriented polypropylene (BOPP), or high-density polyethylene (HDPE).

The membrane may be made of a plastic film or a plastic sheet, which are waterproof, light-weighted, durable and have a hight strength-to-weight ratio. The plastic film or plastic sheet may be made of a polyolefin film or polyethylene (PE) or polypropylene (PP), polyester or polyvinyl chloride (PVC) or bioplastics.

In some embodiments, the membrane may be made of a polyethylene, wherein the polyethylene is low-density polyethylene (LPDE), linear low-density polyethylene (LLPDE), medium-density polyethylene (MPDE), or high-density polyethylene (HPDE). The advantage of using polyethylene film for the membrane is that it is waterproof, lightweight, flexible, impact resistant, recyclable, and low-cost.

In some embodiments the membrane may be made of a polyester, wherein the polyester is polyethylene terephthalate (PET). The advantage of using PET-films for the membrane is that it has a high tensile strength, is waterproof, and recyclable.

In some embodiments the membrane may be made of a polyvinyl chloride. The advantage of this is that it is waterproof, durable, non-toxic, flexible, lightweight, and low-cost.

In some embodiments, the membrane may be made of a bioplastic, wherein the bioplastic is bio-polyethylene (bio-PE), bio-polyethylene terephthalate (bio-PET), or bio-polypropylene (bio-PP).

In a preferred embodiment, the membrane is made of polypropylene. The advantage of using a polypropylene for the membrane is that it is environmentally friendly, lightweight, flexible, highly waterproof, low-cost, recyclable, and has a high tensile strength.

In another preferred embodiment, the membrane is made of polypropylene with high mineral content. This membrane is advantageous as it is very ductile and deforms by tension.

The mineral content may be an inorganic plastic filler such as Glass fibres, Glass beads, Magnesium, Talc, Mica, Silica, Calcium silicate, Barium sulphate, Kaolin, or Sodium sulphate.

In an embodiment, the membrane is bendable but has no bending lines. In this embodiment, the membrane is formed by a continuous sheet where the membrane bottom is located at a central portion of this continuous sheet. The annular portion surrounding the central portion forms the membrane sides. Tests have shown that the membrane sides will bend more or less randomly around the push face of the push element when inserting the membrane into the container. The push element thus acts as a punch tool where the container acts as a die.

In an embodiment, the central bending line forms an octagon comprising four broad edges, having a first length, and four narrow edges, having a second length, wherein the first length is greater than the second length, wherein the broad edges are connected to the narrow edges at vertices, wherein the vertices have substantially the same angle, and at each of the vertices two bending lines extend substantially perpendicular from respective broad edges and narrow edges, the two bending lines extend to the membrane edge. This embodiment has in tests shown to be particularly stable when inserted into various differently shaped container.

In an embodiment, the membrane comprises a third bending line extending from each vertex to the membrane edge, wherein the third bending line extends substantially between the two bending lines extending from said vertex. The third bending line will further improve the stableness of the membrane when inserted into various differently shaped containers and in particular round containers.

An object of the invention is a method of forming a plant pot. The method comprises steps of
- providing a kit according to any one of the earlier embodiments and a container comprising container bottom, a top aperture and one or more walls extending from the container bottom to the top aperture;
- placing the membrane on the container with the central membrane bottom above the top aperture;
- pushing the central membrane bottom towards the container bottom,
- insertion of the push element into the container;
- filling soil into the through-going channel; and
- removing the push element, thereby forming a plant pot.

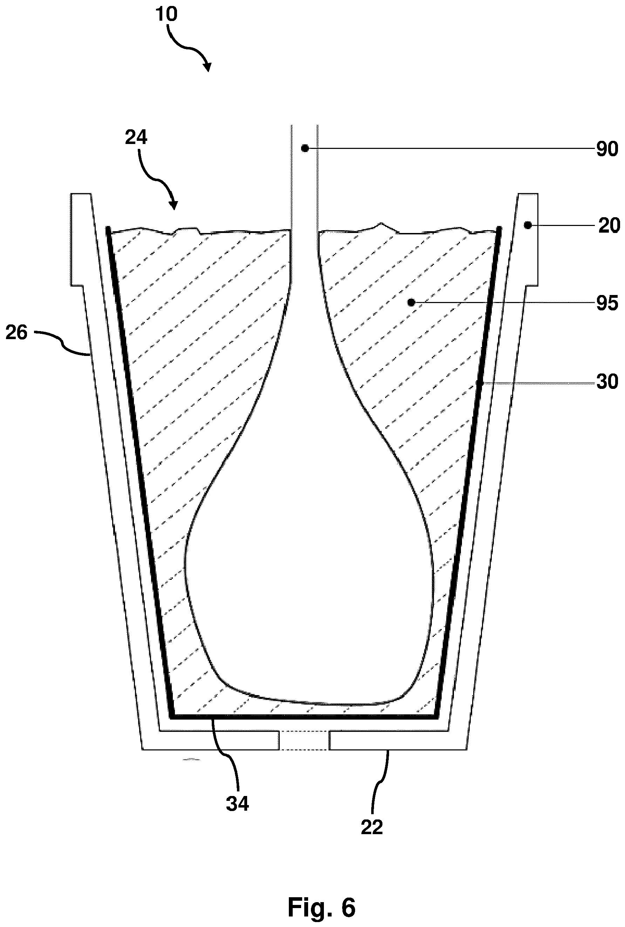

Thereby, a plant pot is formed using simple means. The plant pot may afterwards be fitted with a plant as shown in figure 6.

In an embodiment, the step of pushing is performed by the step of insertion of the push element. This will further increase the efficiency of the method.

In an embodiment, a number of membranes is stored within the push element before use and the number of membranes are removed from the push element before placing the one membrane on the container, optionally placing any remaining membranes within the push element again after use. Tests have shown that a plurality of membranes can be pre-packed within the push element for the production of a compact kit unit. The number of membranes allows for the lining of a corresponding number of containers using the same push element. Optionally, users may repack any remaining membranes not used into the push element again after it is removed from the container. This allows the kit to be repacked into the compact unit after usage.

An object of the invention is achieved by a plant pot for holding a plant, the plant pot comprising
- a container comprising a container bottom, a top aperture and one or more walls extending from the container bottom to the top aperture;
- a membrane comprising a central membrane bottom and a membrane edge,

wherein the container is lined with the membrane according to the method described above.

The membrane is supported by walls of the container. The membrane will during use be filled with soil, water and one or more plants which will press the membrane towards the one or more walls. Since the membrane is waterproof, the plant pot becomes waterproof, whether the container is waterproof or not. Thus, the container does not need to be treated with any additional waterproof material such as epoxy, and as a consequence the container can be made of materials which can be reused or recycled with no or limited subsequent processing. At the end-of-life or end-of-use, the membrane and the container can be separated very easily.

The membrane can at anytime be removed and separated from the container as there are no adhesive used to interconnect the membrane and the container. The membrane will during normal use be pressed towards the container by soil, water and one or more plants placed within the membrane. Thus, a person would be able to separate the membrane and container by removing the soil, one or more plants and water followed by removing the membrane. The membrane may afterwards be reused or be recycled. Likewise, the container may be reused or recycled.

Furthermore, presently waterproof containers can be made using epoxy, but any damage can cause cracks, and as a result the container will no longer be waterproof. Thus, the invention is much more reliable and in case of the membrane being damaged, the damaged membrane can be replaced and recycled.

In an embodiment, the at least one membrane further comprises
- a central bending line surrounding and defining the central membrane bottom; and
- a plurality of bending lines extending from the central bending line and to the membrane edge and defining a plurality of membrane sides.

The central membrane bottom is adapted to fit the container bottom within some tolerances. The central membrane bottom thereby substantially fits the container bottom such that the membrane sides can be supported in a stable way by the one or more walls. The plurality of bending lines extending to the membrane edge enable the membrane to fit most containers irrespective of the shape of the container. In most embodiments, the membrane edge is a circle or at least circular as this ensures that the membrane sides have the same height or substantially the same height.

The membrane may be made of synthetic paper, which is waterproof, flexible, durable and tear resistant. The synthetic paper may be made of polyethylene (PE) or polypropylene (PP) or biaxially oriented polypropylene (BOPP) or high-density polyethylene (HDPE).

The membrane may be made of a plastic film or a plastic sheet, which are waterproof, light-weighted, durable and have a high strength-to-weight ratio. The plastic film or plastic sheet may be made of a polyolefin film or polyethylene (PE) or polypropylene (PP), polyester or polyvinyl chloride (PVC) or bioplastics.

In some embodiments the membrane may be made of a polyethylene, wherein the polyethylene is low-density polyethylene (LPDE), linear low-density polyethylene (LLPDE), medium-density polyethylene (MPDE), or high-density polyethylene (HPDE). The advantage of using polyethylene films for the membrane is that it is waterproof, lightweight, flexible, impact resistant, recyclable, and low-cost.

In some embodiments, the membrane may be made of a polyester, wherein the polyester is polyethylene terephthalate (PET). The advantage of using PET-films for the membrane is that it has a high tensile strength, is waterproof and recyclable.

In some embodiments, the membrane may be made of a polyvinyl chloride. The advantage of this is that it is waterproof, durable, non-toxic, flexible, lightweight, and low-cost.

In some embodiments, the membrane may be made of a bioplastic, wherein the bioplastic is bio-polyethylene (bio-PE), bio-polyethylene terephthalate (bio-PET), or bio-polypropylene (bio-PP).

In a preferred embodiment, the membrane is made of polypropylene. The advantage of using a polypropylene for the membrane is that it is environment friendly, lightweight, flexible, highly waterproof, low-cost, recyclable, and has a high tensile strength.

In another preferred embodiment, the membrane is made of polypropylene with high mineral content. This membrane advantageous, as it is very ductile and deforms by tension.

The mineral content may be an inorganic plastic filler such as Glass fibres, Glass beads, Magnesium, Talc, Mica, Silica, Calcium silicate, Barium sulphate, Kaolin, or Sodium sulphate.

In an embodiment, the container is not waterproof as this is not a requirement due to the membrane which makes the plant pot waterproof.

In an embodiment, the container does not comprise epoxy, which is a known waterproof material, since epoxy has the negative effect of being very stable and thus the epoxy will last for many years if not decomposed properly.

In an embodiment, the central bending line form an octagon comprising four broad edges, having a first length, and four narrow edges, having a second length, wherein the first length is greater than the second length, wherein the broad edges are connected to the narrow edges at vertices, wherein the vertices have substantially the same angle, and at each of the vertices two bending lines extend substantially perpendicular from respective broad edges and narrow edges, the two bending lines extend to the membrane edge. This embodiment has in tests shown to be particularly stable when inserted into various differently shaped container.

In an embodiment, the membrane comprises a third bending line extending from each vertex to the membrane edge, wherein the third bending line extends substantially between the two bending lines extending from said vertex. The third bending line will further improve the stableness of the membrane when inserted into various differently shaped containers and in particular round containers.

### Description of the Drawing

- Fig. 1: illustrates a membrane according to the invention.
- Fig. 2: illustrates a kit for lining a container with a membrane.
- Fig. 3: illustrates the insertion of a membrane in a container using a push element.
- Fig. 4: illustrates a membrane inserted into a container using a push element.
- Fig. 5: illustrates a plant pot according to the invention.
- Fig. 6: illustrates a plant pot according to the invention holding a plant.
- Fig. 7: illustrates an exemplary embodiment of the push element.

### Detailed Description of the Invention

| Item | Reference |
|---|---|
| Plant pot | 10 |
| Container | 20 |
| Container bottom | 22 |
| Top aperture | 24 |
| Walls | 26 |
| Membrane | 30 |
| Central bending line | 32 |
| Central membrane bottom | 34 |
| Bending lines | 35 |
| Membrane edge | 36 |
| Membrane sides | 38 |
| Third bending line | 39 |
| Broad edges | 40 |
| Narrow edges | 42 |
| Push element | 50 |
| Through-going channel | 52 |
| Handle | 54 |
| Kit | 70 |
| Plant | 90 |
| Soil | 95 |

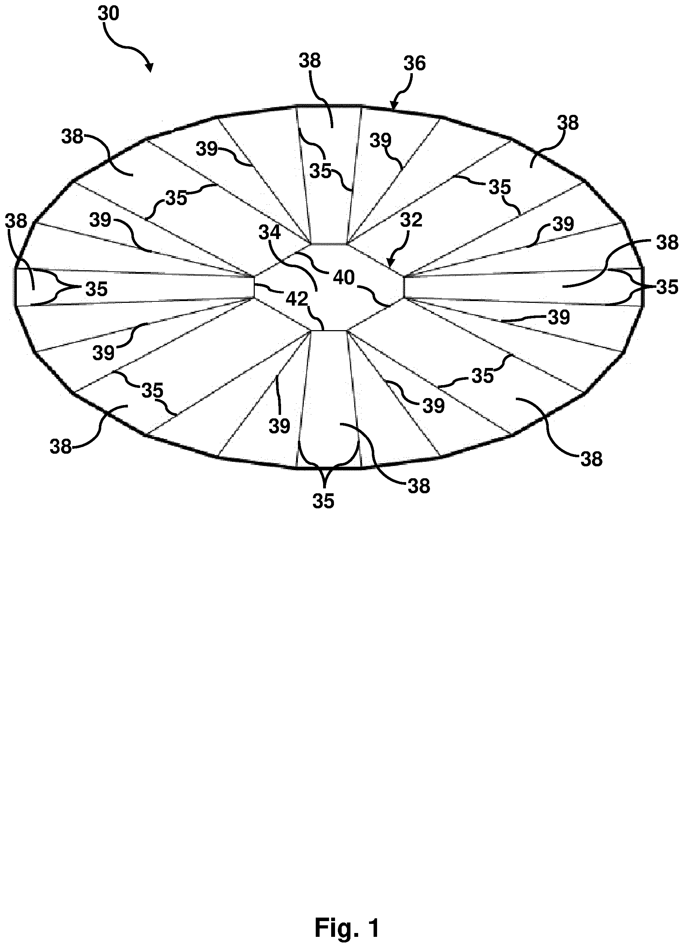

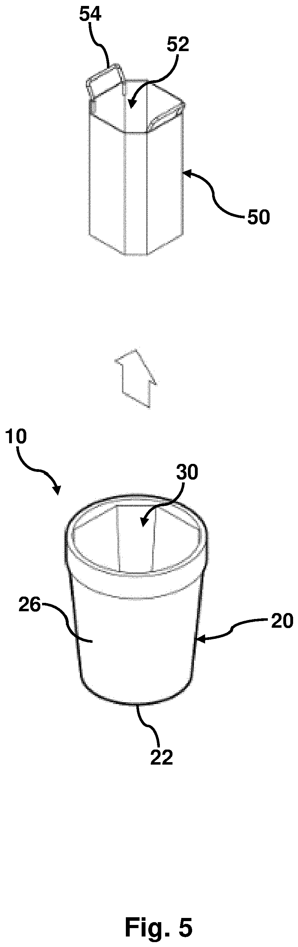

Figure 1 illustrates a membrane 30 according to the invention. The membrane 30 is configured for lining a container 20 to form a plant pot 10 (see figs. 5-6). The membrane comprises a central bending line 32 that surrounds and defines a central membrane bottom 34.

The membrane 30 further comprises a plurality of bending lines 35 extending from the central bending line 32 to a membrane edge 36 of the membrane 30, where the plurality of bending lines 35 defines a plurality of membrane sides 38.

However, the bending lines 32, 35 may be omitted and the membrane sides 38 may bend more or more less randomly around the punch face of a push element.

The membrane 30 is made of a waterproof material such as synthetic paper, plastic film, plastic sheet, Polyolefin film, Polyethylene, Polypropylene, Polyester, Polyvinyl chloride, or Bioplastics.

The membrane 30 may be made of synthetic paper, which is waterproof, flexible, durable and tear resistant. The synthetic paper may be made of polyethylene (PE), or polypropylene (PP), or biaxially oriented polypropylene (BOPP), or high-density polyethylene (HDPE).

The membrane 30 may be made of a plastic film or a plastic sheet, which are waterproof, light-weighted, durable and have a hight strength-to-weight ratio. The plastic film or plastic sheet may be made of a polyolefin film, or polyethylene (PE), or polypropylene (PP), polyester, or polyvinyl chloride (PVC), or bioplastics, or low-density polyethylene (LPDE), or linear low-density polyethylene (LLPDE), or medium-density polyethylene (MPDE), or high-density polyethylene (HPDE), or polyethylene terephthalate (PET), or bio-polyethylene (bio-PE), or bio-polyethylene terephthalate (bio-PET), or bio-polypropylene (bio-PP).

In a preferred embodiment, the membrane 30 is made of polypropylene. The advantage of using a polypropylene for the membrane 30 is that it is environmentally friendly, lightweight, flexible, waterproof, low-cost, recyclable, and has a high tensile strength. In another preferred embodiment, the membrane 30 is made of polypropylene with high mineral content. This membrane is advantageous as it is very ductile and deforms by tension.

The mineral content may be an inorganic plastic filler such as Glass fibres, Glass beads, Magnesium, Talc, Mica, Silica, Calcium silicate, Barium sulphate, Kaolin, or Sodium sulphate.

In some embodiments, the central bending line 32 may form an octagon comprising four broad edges 40, having a first length, and four narrow edges 42, having a second length, where the first length is greater than the second length. The broad edges 40 are connected to the narrow edges 42 at vertices, wherein the vertices have substantially the same angle. Two bending lines 35 extend from each vertex substantially perpendicular from respective broad edges 40 and narrow edges 42. The two bending lines 35 extend to the membrane edge 36. This embodiment has in tests shown to be particularly stable when inserted into various differently shaped containers 20.

In some embodiments, the membrane 30 may further comprise a third bending line 39 extending from each vertex to the membrane edge 36. The third bending line 39 extends substantially between the two bending lines 35 extending from the vertex. The third bending line 39 will further improve the stableness of the membrane 30 when inserted into various differently shaped containers 20 and in particular round containers 20.

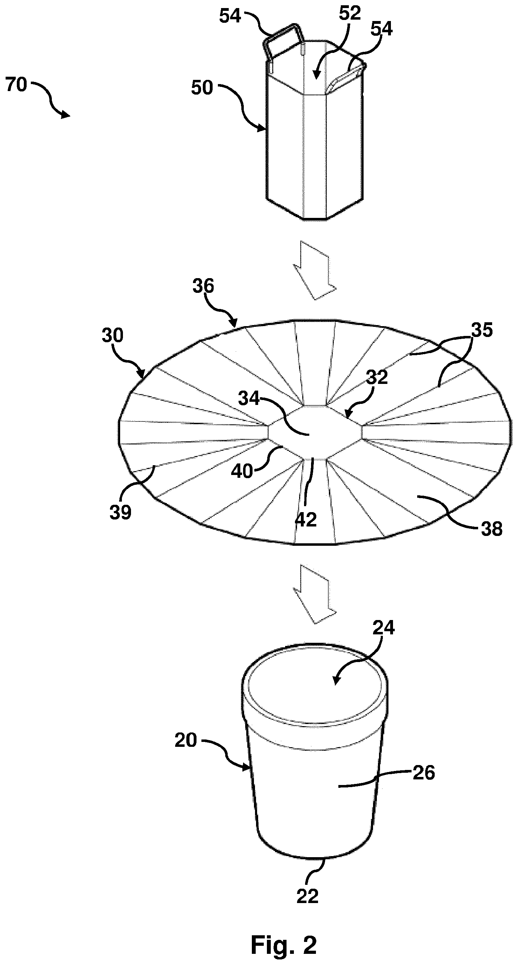

Figure 2 illustrates a kit 70 for lining a container 20 with a membrane 30. The kit 70 comprises at least one membrane 30 and a push element 50. The membrane 30 is identical to the membrane described above in figure 1.

The push element 50 comprises a punch face complementary to the membrane bottom 34, a through-going channel 52 that is configured for providing soil 95 in a controlled manner and a handle 54 that is configured for holding the push element 50 during insertion of the membrane 30 into a container 20.

The push element 50 is adapted for insertion of the membrane 30 into a suitable container 20 comprising a container bottom 22, a top aperture 24, and one or more walls 26 that extend from the container bottom 22 to the top aperture 24.

The punch face is complementary to the membrane bottom 34 such that membrane 30 can be pressed into a container 20 with no to little deformation of membrane bottom 34. The through-going channel 52 enables a reliable way of providing soil into the membrane 30 after insertion without risk of any of the membrane sides 38 bending in a way that allows soil 95 to enter between the membrane 30 and the container 20. This embodiment has in tests shown to be particularly stable when inserted into various differently shaped containers 20.

The length of the push element 50 and the length of the membrane sides 38, i.e. bending lines 35 from the central bending line 32 to the edge 36, may roughly be the same such that one can fill the through-going channel 52 without risk soil spillage on the wrong side of the membrane 30 during use.

When inserting the membrane 30 into the container 20, the membrane 30 is placed in the container 20 with the central membrane bottom 34 above the aperture 24, and the punch face of the push element 50 may be placed above the central membrane bottom 34.

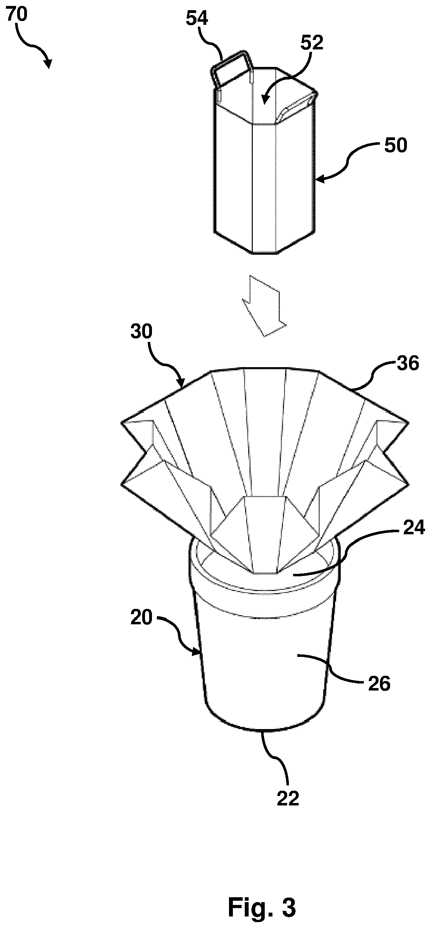

Figure 3 illustrates the insertion of a membrane 30 in a container 20 using a push element 50. The membrane 30, container 20, and push element 50, are identical to those described above in figures 1 and 2.

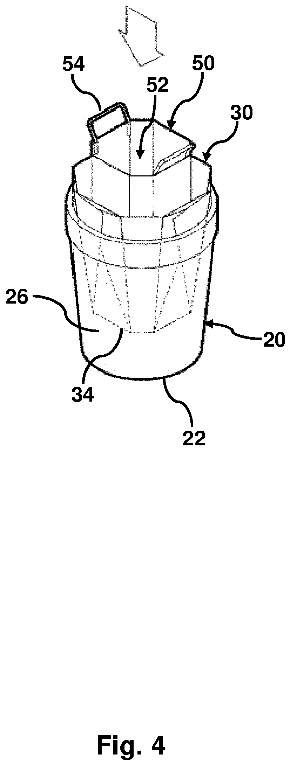

The punch face of the push element 50 may be used to push the central membrane bottom 34 towards the container bottom 22, thereby inserting the membrane 30 and the push element 20 into the container 20, as illustrated in figure 4, where the membrane 30 and the push element 50 have been inserted into a container 20. The membrane 30 can then be filled with soil (95) by filling soil (95) into the through-going channel 52. The push element 50 can then be removed, thereby forming a plant pot 10 according to the invention, as illustrated in figure 5.

The plant pot 10 for holding a plant 90 comprises a container 20 and a membrane 30 identical to the container 20 and membrane as described above in figures 1-4. In the plant pot 10, the central membrane bottom 34 substantially faces the container bottom 22 and the membrane sides 38 are supported by the one or more walls 26 of the container 20. Thereby, the membrane 30 is supported by walls 26 of the container 20.

The membrane 30 will during use be filled with soil 95, water, and one or more plants 90, which will press the membrane 30 towards the one or more walls 26. Since the membrane 30 is waterproof, the plant pot 10 becomes waterproof irrespectively of whether the container 20 is waterproof or not. Thus, the container 20 does not need to be treated with any additional waterproof material such as epoxy, and as a consequence the container 20 can be made of materials which can be reused or recycled with no or limited subsequent processing. At the end-of-life, or end-of-use, the membrane 30 and the container 20 can easily be separated.

The central membrane bottom 34 is adapted to fit the container bottom 22 within some tolerances. The central membrane bottom 34 thereby substantially fits the container bottom 22 such that the membrane sides 38 can be supported in a stable way by the one or more walls 26. The plurality of bending lines 35 extending to the membrane edge 36 enable the membrane 30 to fit most containers 20 irrespectively of the shape of the container 20. In most embodiments, the membrane edge 36 is a circle or at least circular as this ensures that the membrane sides 38 have the same height or substantially the same height.

Furthermore, presently waterproof containers 20 can be made using epoxy, but any damage can cause cracks, and as a result the container 20 will no longer be waterproof. Thus, the invention is much more reliable, and in case the membrane 30 is damaged, the damaged membrane can be replaced and recycled.

In an embodiment, the container 20 may not be waterproof as this is not a requirement due to the membrane 30 which makes the plant pot 10 waterproof.

In an embodiment, the container 20 may not comprise epoxy, which is a known a waterproof material, and which has the negative effect of being very stable and preventing the recyclability of the container 20.

Figure 6 illustrates a plant pot 10 according to the invention holding a plant 90 and soil 95. The plant pot 10 is identical to the plant pot 10 described above in figure 5.

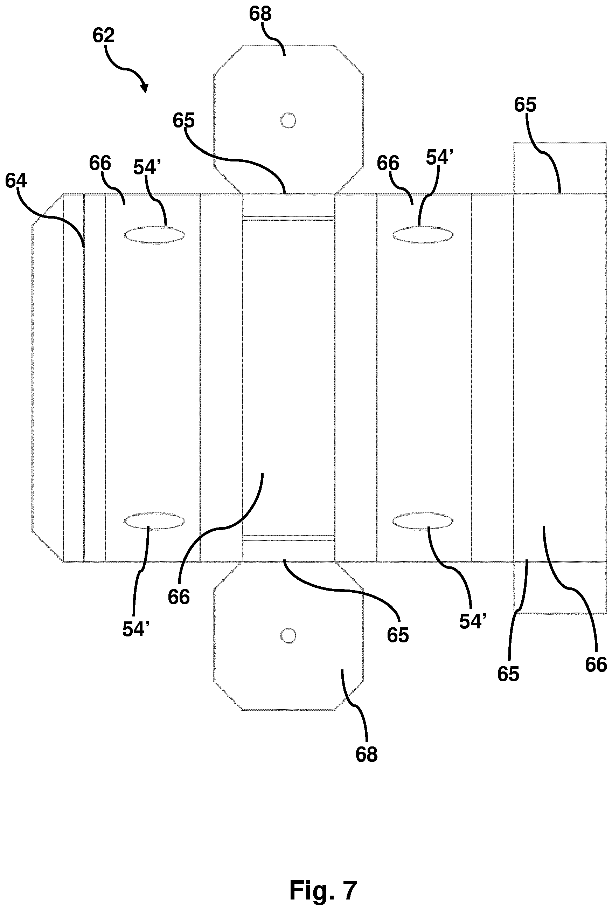

Figure 7 illustrates an exemplary embodiment of the push element 50 described in figure 2. The push element 50 is preferably made of cardboard. Figure 7 illustrates a foldable pattern 62 of the push element 50 before assembly. The pattern 62 comprises bending lines 64 extending from the opposite facing top and bottom edges. The bending lines 64 are arranged in parallel to the opposite facing side edges and define the sides 66 of the push element 50. Further, the pattern 62 comprises bending lines 65 extending along the top and bottom edges. The bending lines 65 intersect with the bending lines 64 and define the top and bottom 68 of the push element 50.

The outermost sides 66 of the pattern 62 are folded back over the other sides 66 and joined together, e.g., by means of adhesive, to form the through-going channel 52. The bottom 68 is folded back over the bottom opening of the through-going channel 52 and joined with a bottom flange. Optionally, a number of membranes 30 is packed within the push element 50 before closing off the top 68. Finally, the top 68 is folded back over the top opening of the through-going channel 52 and joined with a top flange.

The top 68 and/or the bottom 68 are removable and thus can be removed during use.

Openings formed in the sides 66 are used as handles 54' during usage of the push element 50.

## Claims

1. A kit (70) for lining a container (20) with a membrane (30), the kit (70) comprises
- at least one membrane (30) comprising
- a central membrane bottom (34) and a membrane edge (36);
- a push element (50) comprising
a push face complementary to the membrane bottom (34), and
a through-going channel (52) for providing soil (95) in a controlled manner, wherein the membrane (30) is made of a waterproof material such as synthetic paper, plastic film, plastic sheet, Polyolefin film, Polyethylene, Polypropylene, Polyester, Polyvinyl chloride, or Bioplastics.

2. The kit (70) according to claim 1, **characterised in that** the membrane (30) is bendable, but has no bending lines.

3. The kit (70) according to claim 1, **characterised in that** the at least one membrane (30) further comprises
- a central bending line (32) surrounding and defining the central membrane bottom (34); and
- a plurality of bending lines (35) extending from the central bending line (32) and to the membrane edge (36) and defining a plurality of membrane sides (38).

4. The kit (70) according to claim 3, wherein the central bending line (34) forms an octagon comprising four broad edges (40), having a first length, and four narrow edges (42), having a second length, wherein the first length is longer than the second length, wherein the broad edges (40) are connected to the narrow edges (42) at vertices, wherein the vertices have substantially the same angle, and at each of the vertices two bending lines (35) extend substantially perpendicular from respective broad edges (40) and narrow edges (42), the two bending lines (35) extend to the membrane edge (36).

5. The kit (70) according to claim 4, wherein the membrane comprises a third bending line (39) extending from each vertex to the membrane edge (36), wherein the third bending line (39) extends substantially between the two bending lines (35) extending from said vertex.

6. The kit (70) according to any one of claims 1-5, wherein the push element (50) is made of a metal or cardboard.

7. The kit (70) according to any one of claims 1-6, wherein a number of membranes (30) are stored within the push element (50) before use, optionally storing any remaining membranes (30) in the push element (50) after use.

8. A method of forming a plant pot (10), the method comprising steps of
- providing a kit (70) according to any one of claims 1-7 and a container (20) comprising a container bottom (22), a top aperture (24) and one or more walls (26) extending from the container bottom (22) to the top aperture (24);
- placing one membrane (30) on the container (20) with the central membrane bottom (34) above the top aperture (24);
- pushing the central membrane bottom (34) towards the container bottom (22),
- insertion of the push element (50) into the container (20);
- filling soil (95) into the through-going channel (52); and
- removing the push element (50), thereby forming a plant pot (10).

9. The method according to claim 8, wherein the step of pushing is performed by the step of insertion of the push element (50).

10. The method according to claim 8 or 9, wherein a number of membranes (30) is stored within the push element (50) before use and the number of membranes (30) are removed from the push element (50) before placing the one membrane (30) on the container (20), optionally placing any remaining membranes (30) back within the push element (50) after use.

11. A plant pot (10) for holding a plant (90), the plant pot (10) comprising
- a container (20) comprising a container bottom (22), a top aperture (24) and one or more walls (26) extending from the container bottom (22) to the top aperture (24);
- a membrane (30) comprising a central membrane bottom (34) and a membrane edge (36),
wherein the container (20) is lined with the membrane (30) according to any one of claims 8-10.

12. The plant pot (10) according to claim 11, wherein the container (20) is not waterproof.

13. The plant pot (10) according to claim 11 or 12, wherein the container (20) does not comprise epoxy.
